# EUROPEAN PATENT APPLICATION

(11) **EP 0 554 970 A2**
(43) Date of publication of application: **11.08.1993**
(21) Application number: 93300012.7
(22) Date of filing: 04.01.1993
(51) Int. Cl.: H04Q 11/04, H04L 12/56, H04L 12/64

(54) **ATM/STM switching arrangement**

(30) Priority: 08.01.1992 GB 9200331
(71) Applicant: GPT LIMITED, Coventry, CV3 1HJ (GB)
(72) Inventor: Jeffrey, Mark Timothy, Wimborne, Dorset BH21 3NH (GB); Maddern, Thomas Slade, Wimborne, Dorset BH21 2HU (GB); Proctor, Richard John, Wimborne, Dorset BH21 3QY (GB)
(74) Representative: Branfield, Henry Anthony

(57) **Abstract**

A telecommunications switch comprises a plurality of parallel data switching planes and a parallel control plane, each plane having an equal number of input ports and output ports and a control switching unit to switch each input port to any output port, wherein ATM and STM traffic is carried by the same switch. The ATM traffic will typically be switched at a cell level and the STM traffic at the octet level.

The switch may comprise rotators to switch each input port cyclically to each timeslot of the central unit and each timeslot of the central unit cyclically to each output port.

## Description

The proposed Broadband - Integrated Services Digital Network (B-ISDN) requires switching of data using the Asynchronous Transfer Mode (ATM) multiplex structure, with all services placed in cells of 53 octets including routing information.

The existing network employs Synchronous Transfer Mode (STM) to carry individual octets along predetermined routes, controlled by stores in the switches.

For these reasons there are three possible strategies for the introduction of ATM based B-ISDN alongside STM:
1) Overlay network.
   The addition of an ATM network alongside the existing STM network. B-ISDN services are carried on the overlay, and existing services remain on the STM.
   This solution requires major capital investment to introduce ATM at a national level, and there is no gurantee that the service take-up will be sufficient to cover this cost within a reasonable time. This also limits the flexibility of management of the network.
2) Emulation over ATM.
   ATM can provide a "circuit emulation" of an STM circuit, and this is often seen as the way to support STM services on an ATM network.
   It has been assumed that the existing STM services (e.g. voice) can eventually be carried over the ATM network by adapting the service into the ATM cells. This produces delays for packetisation, and also requires the STM service to be resilient against cell loss, which many services (notably H.261 video) are not yet able to cope with.
   Therefore, while this may be possible when ATM is a more mature environment, the services are not yet sufficiently developed to use ATM.
3) Dual mode network.
   An arrangement according to the present invention which provides the ability to switch both ATM traffic and STM traffic in the same switch fabric. This avoids the problems above, and has other benefits as well.

According to the present invention there is provided a telecommunications switch comprising input ports and output ports and a central switching core between the input ports and the output ports, the switching core being arranged to switch both ATM and STM traffic.

The present invention is a dual mode switch, capable of switching both STM and ATM traffic in the same core. There are several possible ways to implement such a switch, and one such implementation is referenced below.

The switch provides external ports, each of which may be designed to support ATM traffic or STM (multiples of 64 kbit/s) traffic, or a more sophisticated port may support both forms of traffic on the same route.

The switch core is formed of units capable of switching either STM octets (using control stores to define the route) or ATM cells (using ATM header translation to define the route).

The two modes are partitioned within the switch core, so that the variable nature of the ATM traffic cannot impact on the flow of STM octets.

It is important to note that the STM traffic is switched at the octet level. It is NOT packetised into ATM cells.

The present invention may be implemented in conjunction with the ATM Switching Arrangement described and claimed in United Kingdom Patent Application Nos. 9116748.6, 9116749.4, 9116750.2 and 9116763.5 which are included herein by reference. These applications give a more detailed description of the construction and operation of the switch.

The present invention will now be described, by way of example, with reference to the accompanying drawings, in which :-
Figure 1 shows a schematic diagram of a switch arrangement for ATM operation;
Figure 2 shows a schematic diagram of a switch arrangement for STM operation;
Figure 3 shows the request sequence to route a cell across a switch;
Figure 4 shows the AU functions for ATM and STM operation;
Figure 5 shows a diagrammatic view of one data plane and the control plane of the switch core.

The concept of the dual mode switch of the present invention is to use the same switch core both as an ATM and as an STM switch. The same interconnect and core technology is used, but it is configured to operate as ATM or STM (or a mixture) on a port by port basis.

Logically, the whole switch typically has 7 data planes and 1 control plane, each of which operate at about 40M. Each plane carries 64 bit timeslots. Each of these timeslots is used to carry an ATM cell, or 42 STM 10 bit samples (8 data bits + channel associated signalling + check bit). For interconnect between cards, these 8 logical streams would be multiplexed onto a single optical link at 330M.

The distribution functionality gives each 155M peripheral port a 64 bit window on to each of the 16 central switches over an internal cycle. The internal cycle is a fifth of a frame, hence there are 80 timeslots in the 125 microsecond frame. The access to this core from the peripheral is at 330M, which gives a fanout close to CLOS. If necessary an eighth data plane can be added to increase the capacity to 48 STM samples per timeslot, or the data rate can be increased to give six internal cycles per frame.

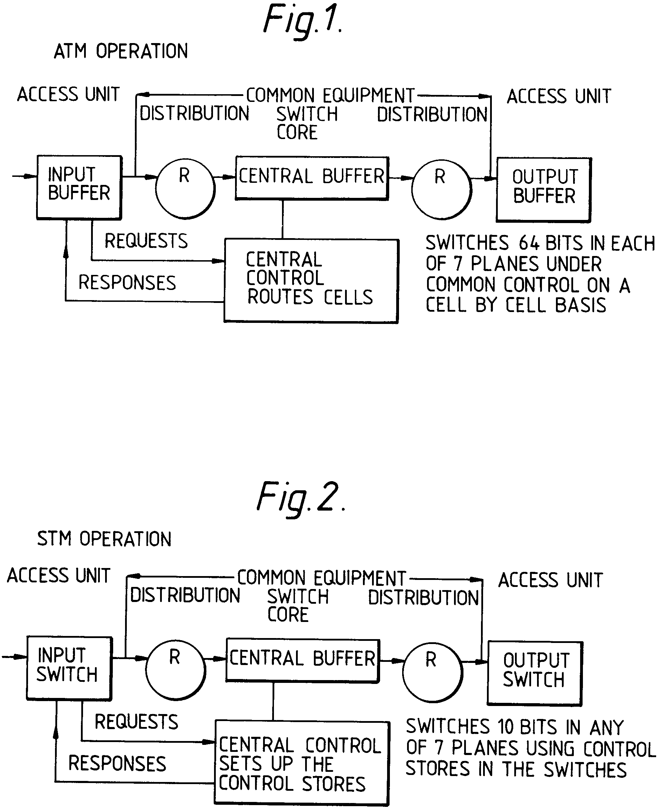

Figures 1 and 2 show the basic operation for ATM and STM respectively. The switch core, distribution, and Access Unit (AU) functions are highlighted. The switch core is the same for ATM and STM, but operates in slightly different ways. The distribution is the same; the AUs are rather different.

For ATM operation each central switch has a buffer for one cell per output port.

Each incoming cell has its incoming Virtual Channel Identifier (VCI) translated to the outgoing VCI and the required output port. This port number is used to route the cells.

The switch has a small, multiple-headed, input queue. This is examined and the input port requests the free state of the central buffers. If free, it sends the cell to the central switch. A fixed period later (depending on the relative port numbers) the cell will be sent to the output port, where it is queued for transmission.

There is no fixed cell routing, but the cyclic access to the core means that cell sequence integrity is maintained whatever route is used.

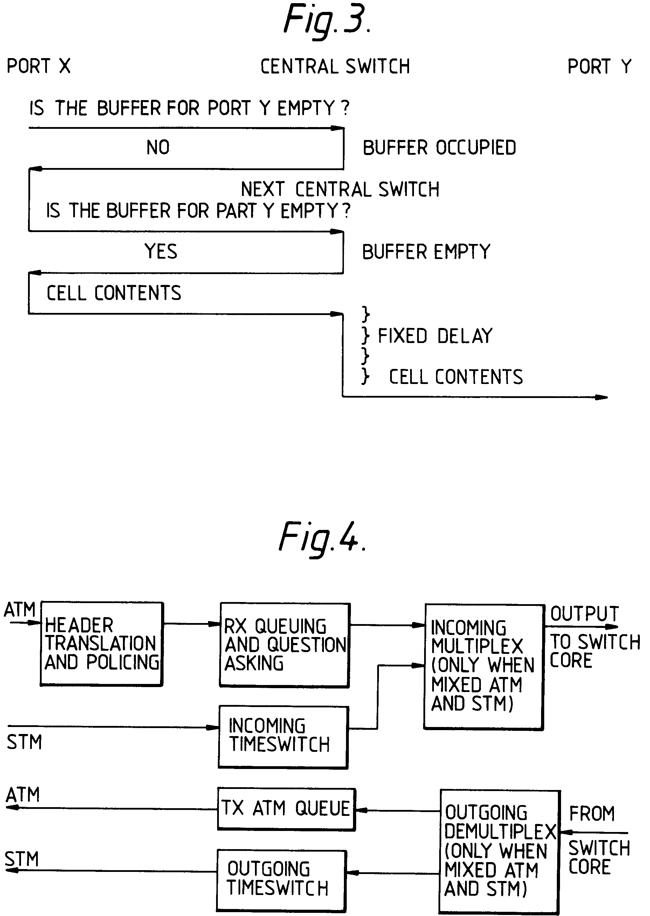

Figure 3 shows the organisation of request sequence to route a cell across the switch. The first port tried was blocked but the second port tried was available. In practice a number of questions for different destinations can be asked to make the input queue multiple headed. When there is more than one cell waiting, two or even three questions are sent and handled at once in the same flow.

Fan-out of cells is achieved through the central stage by using a centrally held map of ports that the cell should be sent to. The fan-out is done in the core. Additional sophistication is employed to alleviate blocking. Fan-in is also supported.

Higher rate ports (600M etc) are supported by concatenating a number of links on to the core. A 600M port would have 4 links, and any cell can use any link. Due to variations in the time spent in the core (depending on the link used) a small very simple resequencing is required.

For STM operation a small incoming time switch is used to route STM samples to predetermined timeslots and positions. These are then routed through the switch core using centrally held control stores to the appropriate output port. At the output a second small time switching function is used to translate between the arrival time across the core and the appropriate output time.

Thus the switch approximates a T-S-T structure.

The control stores in the core can be setup using the control stream that is used for routing the ATM cells. One control store needs to be set up per 64K of data switched, hence 9 would be needed per Synchronous Digital Hierarchy (SDH) column, 32 for a 2M link.

The 42 STM sample opportunities every timeslot are independent. Although any of these can be used to route from any input to any output, it is not possible to switch between the 42 streams. This is because of the physical separation of the data planes, and the structure of the data store in the core.

Peripherals can mix ATM and STM by operating as ATM in certain timeslots and STM in others. This mixture needs to be predefined, and care is necessary to group the ATM traffic together and the STM traffic together. Figure 4 shows the AU functions required for a peripheral that handles both ATM and STM.

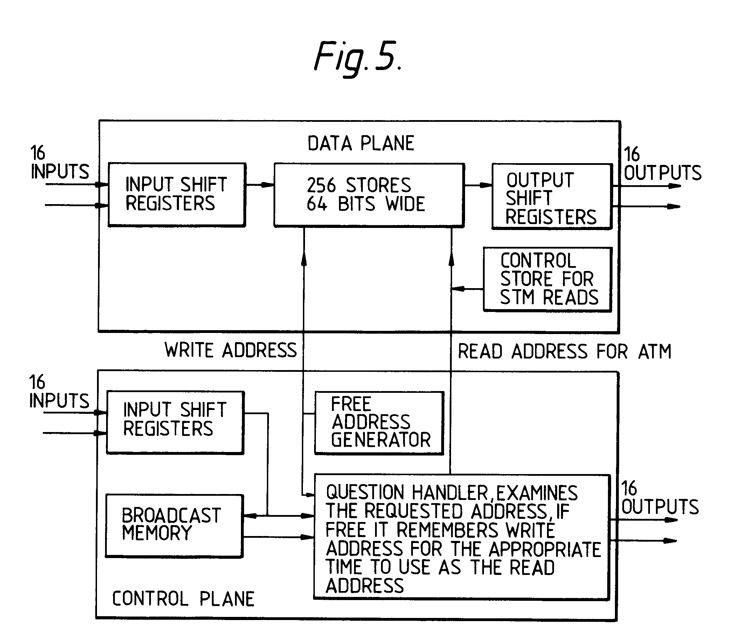

The core consists of the data planes and the control plane. Figure 5 shows a block diagram of one data plane and the control plane.

In the data plane, the 16 inputs and outputs are staggered in time. Every 4 clock periods one of the 16 input (64 bit) shift registers becomes full and the 64 bits are written to the cell store, every 4 clock periods one output register is empty and is loaded with 64 bits from the cell store. The read and write accesses are interleaved, for simplicity.

In the control plane, the requests are also staggered in time, so that only one need be actioned at once. These are read in serially from the 16 inputs, and then handled by the question answering function. This looks to see if the requested output buffer is free and, if so, answers appropriately to the request. The question handler then stores the address generated by the free address generator until the appropriate time, when it is used as a read address in the data plane.

For multicast requests, the broadcast memory is accessed to determine which addresses the cell is intended for.

Distribution functionality includes the interconnect to the peripherals from the central switches together with the rotator functions that spread the load over the switches.

This set of functions can be done electrically, electrically with optic links, or optically throughout. The rotator functionality is a pure space switch that requires no memory, and can easily be performed optically.

The switch can grow through: a simple 16 port switch; the normal 256 port switches (using a rotator function); larger switches (using two stages of rotators and larger central switches). There are many cost effective intermediate growth steps.

The switch behaves as a single stage ATM switch, with some added delay due to the propogation across the core. This design has low delay, low jitter and low cell loss, and if a port should overload it has negligible effect on other traffic. To carry the STM traffic, the switch has the penalty of the control stores in the core that would not be used for ATM.

As an STM switch, the delays are not as small as possible but would be acceptable. The switch has the penalty of the control plane which has greater capacity than would be required for STM operations.

## Claims

1. A telecommunications switch comprising input ports and output ports and a central switching core between the input ports and the output ports, the switching core being arranged to switch both ATM and STM traffic.

2. A switch as claimed in Claim 1, wherein ATM traffic is switched at the cell level and STM traffic is switched at the octet level.

3. A switch as claimed in Claim 1 or 2, wherein STM traffic in the core is partitioned from ATM traffic.

4. A telecommunications switch as claimed in any preceding claim further comprising a plurality of parallel data switching planes and a a parallel control plane, each plane having an equal number of input ports and output ports and a central switching unit to switch each input port to any output port wherein ATM and STM traffic is carried by the switch.

5. A switch as claimed in Claim 4, further comprising rotator means to connect each input port cyclically to each timeslot of the central unit.

6. A switch as claimed in Claim 5, further comprising a second rotator means to connect each timeslot of the central switching unit cyclically to each output port.

7. A switch as claimed in Claim 5 or 6, wherein the or each rotator means comprises a single stage of rotators.

8. A switch as claimed in Claim 5 or 6, wherein the or each rotator means comprises multi-stage rotators.

9. A switch as claimed in Claim 5 or any claim appendent thereto, wherein a plurality of data streams are concatenated to a single input port.

10. A switch as claimed in Claim 5 or any claim appendent thereto, wherein a single data stream is divided between a plurality of input ports.

11. A switch as claimed in Claim 5 or any claim appendent thereto, wherein a plurality of data streams are concatenated to a single output port.
